# EUROPEAN PATENT APPLICATION

(11) **EP 4 294 029 A1**
(43) Date of publication of application: **20.12.2023**
(21) Application number: 23179882.8
(22) Date of filing: 16.06.2023
(51) Int. Cl.: H04N 21/845, H04N 21/262

(54) **METHODS, SYSTEMS, AND APPARATUSES FOR UPDATING CONTENT DATA**

(30) Priority: 17.06.2022 US 202263353293 P
(71) Applicant: Comcast Cable Communications, LLC, Philadelphia, PA 19103 (US)
(72) Inventor: GILADI, Alexander, Denver CO, 80202 (US); BALK, Alexander, Denver CO, 80202 (US)
(74) Representative: V.O.

(57) **Abstract**

Methods, systems, and apparatuses for updating content data are described herein. Content data may include, for example, manifest files and captions data. A manifest file for a content item may need to be updated when new segments are available for delivery/output. Rather than retrieving an entirely new manifest file, a first manifest file previously received may be updated using a manifest update file(s). The manifest update file(s) may convey any change(s), difference(s), etc., between the first manifest file and the new manifest file that includes content data for the new segments. Captions data may be updated in a similar manner. A captions update may include new captions data corresponding to the new segments, but it may exclude common captions data.

## Description

### CROSS-REFERENCE TO RELATED PATENT APPLICATION

This application claims priority to U.S. Provisional Application Number 63/353,293, filed on June 17, 2022, the entirety of which is incorporated by reference herein.

### BACKGROUND

Content data for content items may be updated at varying levels of frequency. For example, content data for on-demand type content items may require less updates than linear/live content items. In the former case, content data is somewhat static given the backward-looking nature of on-demand content (e.g., previously filmed, produced, encoded, etc.). However, in the latter case, content data is quite dynamic as linear/live content items are more forward-looking in nature. Existing methods and systems for updating content data for both on-demand and linear/live content items are, in some cases, too compute-intensive and/or inefficient. These and other considerations are discussed herein.

### SUMMARY

It is to be understood that both the following general description and the following detailed description are exemplary and explanatory only and are not restrictive. Methods, systems, and apparatuses for updating content data are described herein. Content data may include, for example, manifest files and captions data for content items. A first manifest file for a content item may need to be updated when new segments are available for delivery/output. Rather than retrieving an entirely new manifest file, which may include standard (e.g., boilerplate) content data already within the first manifest file, a client device may instead simply update the first manifest file previously received using a manifest update file(s). The manifest update file(s) may convey any change(s), difference(s), etc., between the first manifest file and the new manifest file that includes new (or updated) content data for the new segments. In this way, the manifest update file(s) may only need to include the new (or updated) content data corresponding to the new segments, and it may exclude the standard (e.g., boilerplate) content data within the first manifest file that the client device previously received.

As noted above, content data may include captions data. Similar to manifest files, captions files may need to be updated when new captions data (e.g., a type of content data) becomes available for the new segments. When the client device began output of the content item, the client device may have received an initialization segment with first captions data (e.g., with, or associated with, the first manifest file). The first captions data may include some amount of uniform, standard captions data (referred to herein as "common captions data") in a similar way that the first manifest file may include standard (e.g., boilerplate) content data. Rather than providing the common captions data again to the client device, a captions update for the new segments may be provided instead. Similar to the manifest update file(s), the captions update may include new captions data corresponding to the new segments, but it may exclude the common captions data that the client device already received with the initialization segment.

Other examples are possible as well. Additional advantages will be set forth in part in the description which follows or may be learned by practice. The advantages will be realized and attained by means of the elements and combinations particularly pointed out in the appended claims.

### BRIEF DESCRIPTION OF THE DRAWINGS

The accompanying drawings, which are incorporated in and constitute a part of the present description serve to explain the principles of the methods and systems described herein:
Figure 1 shows an example system;
Figure 2A shows illustrations of example manifests and content segment data;
Figure 2B shows example captions data;
Figure 3 shows an example manifest portion;
Figure 4 shows an example manifest portion;
Figure 5A shows an example manifest portion;
Figure 5B shows an example manifest portion;
Figure 6 shows an example system;
Figure 7 shows a flowchart for an example method;
Figure 8 shows a flowchart for an example method;
Figure 9 shows a flowchart for an example method;
Figure 10 shows a flowchart for an example method; and
Figure 11 shows a flowchart for an example method.

### DETAILED DESCRIPTION

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another configuration includes from the one particular value and/or to the other particular value. Similarly, when values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

As will be appreciated by one skilled in the art, hardware, software, or a combination of software and hardware may be implemented. Furthermore, a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memristors, Non-Volatile Random Access Memory (NVRAM), flash memory, or a combination thereof.

Throughout this application reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

Methods, systems, and apparatuses for updating content data are described herein. Content data may include, for example, manifest-related data and captions data for content items. Manifests may include, for example, one or more files, media presentation description files, or any other suitable files or data structures for providing client devices with the information needed to generate requests for portions of content items (collectively referred to herein as "manifest files"). Captions data (e.g., a type of content data) may include, for example, any timed and/or synchronized display of alphanumeric and/or symbolic characters during output of a content item for purposes of accessibility, translation, and/or any other purpose.

Manifest files for some types of content, such as linear/live content, may be updated as new segments are prepared for delivery (e.g., as new segments of the content are encoded, packaged, etc.). For example, a first manifest file associated with a content item may be generated at a first time when a first group of segments are available for delivery/output, and a second manifest file associated with the content item may be generated at a later time when additional segments are available for delivery/output. Rather than retrieving the entirety of the second manifest file, which may include standard (e.g., boilerplate) content data already within the first manifest file, content output devices may instead update the first manifest file using a manifest update file(s) (e.g., a "patch" file).

The manifest update file(s) may convey any change(s), difference(s), etc., between the first manifest file and the second manifest file. For example, the first group of segments may be associated with a first period element, and the additional segments may be associated with a second period element. In such a scenario, the manifest update file(s) may only include information relating to the second period. The manifest update file(s) may be generated using a series of "add," "replace," and/or "remove" operations that are performed on the first manifest file based on the change(s), difference(s), etc., between the two manifest files. This series of "add," "replace," and/or "remove" operations may together function as a "copy" operation(s).

The particular operations used when generating the manifest update file(s), as well their order and/or the number of operations used, may be determined based on computing complexity. For example, it may be most efficient to use an existing portion of the first manifest file (e.g., a Period element and its child elements) as a base for the manifest update file(s). In this example, the attributes, elements, values, etc., within the existing portion may be updated/replaced/added based on a portion of the second manifest file corresponding to the additional segments. In other examples, it may be most efficient to copy the existing portion from the second manifest file to the first manifest file directly (e.g., using a single "add" operation). Choosing which method to use may be based on: a threshold (or lowest possible) number of operations that are required, a threshold (or lowest possible) number of characters of resulting text (e.g., characters within a resulting manifest update file(s)), a threshold computing complexity, a weighted combination thereof, and/or the like. In this way, the manifest update file(s) may only need to include new (or updated) content data corresponding to the additional segments, and it may exclude the standard (e.g., boilerplate) content data within the first manifest file previously received.

Captions data (also known as closed captions or subtitles), similarly to manifest files, may need to be updated as linear/live content items progress and new captions data becomes available. For example, when a client device begins output of a content item, the client device may receive an initialization segment that includes first captions data corresponding to the content segment(s) received (e.g., with, or associated with, the first manifest file). The first captions data of the initialization segment may include some amount of uniform, standard captions data (referred to herein as "common captions data") in a similar way that the first manifest file may include standard (e.g., boilerplate) content data. When additional segments are available for delivery/output, corresponding captions data for those additional segments may need to be provided to the client device. Rather than providing the common captions data again to the client device, a captions update (e.g., a captions update file, also referred to herein as a "captions update segment") may instead be provided. Similar to the manifest update file(s), the captions update may include new captions data corresponding to the additional segments (e.g., new lines of dialog, description, etc.). The captions update may exclude the common captions data that the client device already received with the initialization segment.

The captions updates described herein, similarly to the manifest update files, may comprise a lesser amount of data as compared to existing solutions for updating content data. As a result, the captions updates and the manifest files described herein may improve network traffic and device compute requirements. Other efficiencies and improvements are realized as well, as further described herein.

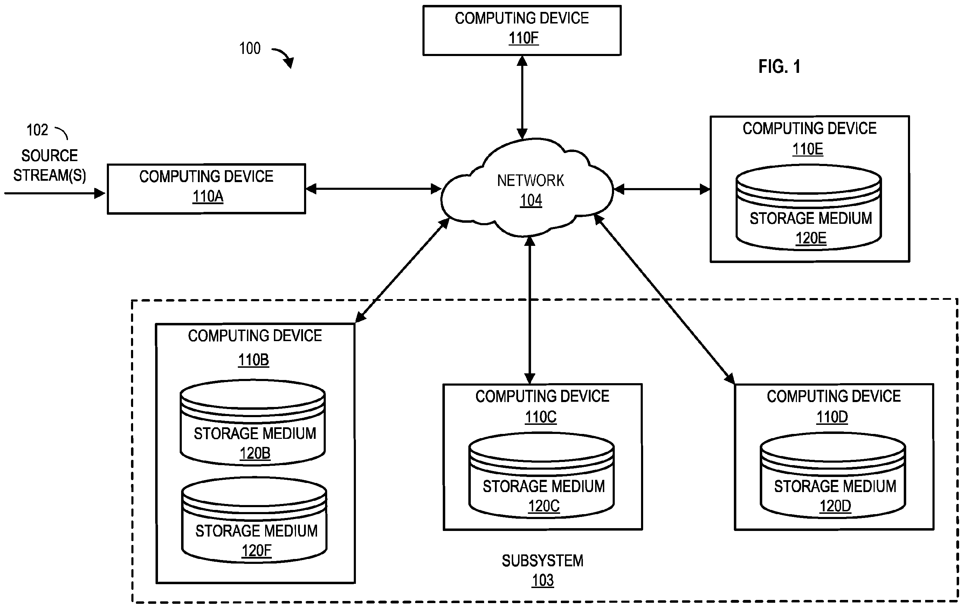

**FIG. 1** shows an example system **100.** The system **100** may comprise a content delivery network, a data network, a content distribution network, or any other network or content distribution system. The system **100** may comprise computing devices **110A-110F.** Any of the computing devices **110A, 110B, 110C, 110D, 110E,** and/or **110F** shown in the system **100** may comprise any number of components/modules, storage mediums, etc., in addition to (or less than) the components/modules, storage mediums, etc., that are shown in FIG. **1****.** For example, as shown in **FIG. 1****,** the computing devices **110B-110E** each comprise one or more storage mediums. In other configurations of the system **100,** those storage mediums may be separate devices (e.g., data servers) or they may be part of another computing device shown in the system **100.**

The computing devices **110A-110F** may communicate via a network **104.** The network **104** may be an optical fiber network, a coaxial cable network, a hybrid fiber-coaxial network, a wireless network, a satellite system, a direct broadcast system, an Ethernet network, a high-definition multimedia interface network, a Universal Serial Bus (USB) network, or any combination thereof. Data may be sent on the network **104** via a variety of transmission paths, including wireless paths (e.g., satellite paths, Wi-Fi paths, cellular paths, etc.) and terrestrial paths (e.g., wired paths, a direct feed source via a direct line, etc.).

The system **100** may comprise a subsystem **103.** The subsystem **103** may comprise an upstream portion/tier (e.g., an origin) of a content delivery network, a data network, a content distribution network, or any other network or content distribution system. As shown in **FIG. 1****,** the computing devices **110B-110D** may be part of the subsystem **103;** however, it is to be understood that the subsystem **103** may comprise greater or fewer devices than the computing devices **110B-110D.** The subsystem **103** may generate and/or output portions of content for consumption (e.g., output). For example, the subsystem **103** may convert raw versions of content (e.g., broadcast content) into compressed or otherwise more "consumable" versions suitable for playback/output by client devices, user devices, media devices, and other consumer-level computing devices. "Consumable" versions of content - or portions thereof - generated and/or output by the subsystem **103** may include, for example, data files adhering to Dynamic Adaptive Streaming over HTTP (DASH), ITU-T H.261, ITU-T H.262 (MPEG-2 video), ITU-T H.263, ITU-T H.264 (MPEG-4 AVC), ITU-T H.265 (MPEG HEVC), ITU-T H.266 (MPEG VVC), MPEG EVC, MPEG LC-EVC, AOM AV1, VP9, or any other video file format, whether such format is presently known or developed in the future. The computing devices **110B-110D** shown as being part of the subsystem **103** in **FIG.** 1 may operate as a system to generate and/or output portions of content, convert raw versions of content (e.g., broadcast content) into compressed or otherwise more "consumable" versions, etc.

Content data may include, for example, manifests and captions data for content items. Manifests may include, for example, one or more files, media presentation description files, or any other suitable files or data structures for providing client devices with the information needed to generate requests for portions of content items (collectively referred to herein as "manifest files"). Captions data may include, for example, any timed and/or synchronized display of alphanumeric and/or symbolic characters during output of a content item for purposes of accessibility, translation, and/or any other purpose.

The computing device **110A** may comprise an encoder, a transcoder, and/or any other device(s)/module(s) suitable for receiving raw forms of content and generating consumable content. The computing device **110A** may receive a source stream **102** and transcode the source stream **102** to generate one or more transcoded streams, encoded streams, etc. (referred to herein collectively as "transcoded streams") for each content item. The source stream **102** may be a live stream (e.g., a linear content stream) or a previously recorded stream, or a video-on-demand (VOD) stream. The computing device **110A** may receive the source stream **102** from an external source (e.g., a stream capture source, a data storage device, a media server, etc.). The computing device **110A** may receive the source stream **102** via a wired or wireless network connection, such as the network **104** or another network (not shown). It should be noted that although a single source stream **102** is shown in **FIG. 1****,** this is not to be considered limiting. The computing device **110A** may receive any number of source streams **102.** The computing device **110A** may send the transcoded streams to the subsystem **103.**

The source stream **102** may comprise textual information for each content item. The textual information may comprise captions data for one or more portions (e.g., segments) of each content item. The words "caption," "captions," "captions data," "closed captioning," "subtitles," "subtitle content," and/or the like as used herein may refer to any timed and/or synchronized display of alphanumeric and/or symbolic characters during output of a content item/content (e.g., audio and/or video) for purposes of accessibility, translation, and/or any other purpose. A captions element as described herein may comprise a portion of closed captioning/subtitle content, such as a word(s), a sentence(s), a description, and/or any other information that may be conveyed via closed captioning/subtitle content. The textual information may be encoded into the plurality of encoded streams by the computing device **110A.** The captions data may comprise embedded captions data, such as captions data adhering to CTA-608, CTA-708, WebVTT, TTML, and/or any other captions format. The captions data may be encapsulated in content segments, such as segments that are based on the ISO Base Media File Format (ISO-BMFF) standard, etc. The captions data may enable a decoder at a client device to decode a particular segment and present the corresponding video content and audio content with closed captioning/subtitle content embedded therein.

Content segments may be generated by the computing device **110A.** The computing device **110B** may store segments received from the computing device **110A** in the storage medium **120B** and corresponding content data in the storage medium **120F.** For example, the computing device **110B** may comprise a cloud digital video recorder, an ingest handler, a segment handler, and/or any other suitable device(s)/module(s) for receiving segments and associated content data. The computing device **110B** may comprise a storage medium **120B** for storing content segments and a storage medium **120F** for storing content data generally.

The computing device **110C** may comprise a manifest generator, a manifest updater, and/or any other suitable device(s)/module(s) for generating and updating manifest files for content (and/or portions thereof). The computing device **110C** may generate a manifest file facilitating access to content segments at various representations (described further herein). A manifest file may be generated for each client device that requests a content item (or portion thereof), even if two or more devices specify the same manifest file type and/or content segmentation type. The computing device **110C** may generate manifest files based on the segments stored in the storage medium **120B** and corresponding content data stored in the storage medium **120F.** Manifest files may be, for example, media presentation description files (MPD files) for DASH content items. The computing device **110C** may generate manifest files based on a manifest type and/or a content segmentation type. For example, the computing device **110C** may generate manifest files that are number-based, list-based, time-based, etc.

Each manifest file may be generated as a tree or other hierarchy of elements. For example, for content items using DASH, a manifest file may include a Period element that describes a particular duration of the content item/segment (e.g., a duration of the content item bound by a start time and an end time). The Period element may include, as child elements, Representation elements identifying each representation of the content item available. The Representation elements may describe various attributes of the corresponding representation of the content item, allowing for a client device/user device to select a representation for streaming based on device capabilities (e.g., display resolution, supported file formats, etc.) and/or based on available bandwidth. Each manifest file may include a variety of other elements as well, as those skilled in the art may appreciate. The computing device **110C** may comprise a storage medium **120C** for storing the manifest files (or portions thereof).

The computing device **110D** may comprise a server. For example, the computing device **110D** may comprise a content server and/or any other suitable device(s)/module(s) for processing requests for content, manifest files, and/or segments of content. The computing device **110D** may comprise a storage medium **120D** for storing content data, such as manifest files and captions data as described herein. The computing device **110F** may comprise a client device, such as a content/media player, a set-top box, a smart device, a mobile device, a user device, etc. The computing device **110F** may request content and/or output content. While **FIG. 1** only shows one computing device **110F,** it is to be understood that the system **100** may comprise any number of computing devices that record and/or output content items (or portions thereof).

The transcoded streams generated by the computing device **110A** may correspond to a plurality of adaptive bitrate (ABR) representations of the source stream **102** (e.g., a mezzanine feed). For example, the plurality of ABR representations may differ from each other with respect to audio bitrate, a number of audio channels, an audio CODEC, a video bitrate, a video frame size, a video CODEC, a combination thereof, and/or the like. The transcoded streams may be sent to the computing device **110E** (e.g., a just-in-time packager), as further described herein, for processing and subsequent delivery of content to the computing device **110F.**

The subsystem **103** may support multiple content segmentation types. The computing device **110B** may generate segments for each of the content segmentation types supported by the subsystem **103.** Segments may alternately be referred to as "chunks." The subsystem **103** may support both multiplexed segments (video and audio data included in a single multiplexed stream) and non-multiplexed segments (video and audio data included in separate non-multiplexed streams). Further, the subsystem **103** may support container formats in compliance with international standards organization base media file format (ISO-BMFF, as defined in ISO/IEC 14496-12), motion picture experts group 2 transport stream (MPEG-2 TS, as defined in ISO/IEC 13818-1), extensible binary markup language (EBML), WebM, Matroska, or any combination thereof. The computing device **110B** may store the segments in the storage medium **120B** and corresponding content metadata in the storage medium **120F.**

The computing device **110E** may comprise a packaging device, such as a just-in-time packager. The computing device **110F** may communicate with the computing device **110E** when requesting and/or receiving content and/or content data. The computing device **110E** may comprise a storage medium **120E** for storing content and/or content data requested by and/or sent to the computing device **110F.** The computing device **110E** may receive manifest files for content items from the subsystem **103.** The computing device **110E** may receive requests for segments (e.g., portions) of content items from the computing device **110F** according to a manifest files. The computing device **110E** may retrieve segments of the content from the subsystem **103,** prepare/package the segments for output by the computing device **110F,** and deliver the requested segments to the computing device **110F.**

As an example, the computing device **110F** may send a request for an initial manifest file associated with a content item to the computing device **110E.** The phrase "initial manifest file" as used herein refers to a first manifest file for the content item that the computing device **110F** may request and/or a first instance in which the computing device **110F** requests a manifest file associated with the content item. The computing device **110E** may receive the request for the initial manifest file and forward the request to the subsystem **103.** For example, the computing device **110E** may forward the request for the initial manifest file to the computing device **110D.** The computing device **110D** may retrieve the initial manifest file from the storage medium **120D.** Additionally, or in the alternative, the computing device **110D** may request the initial manifest file from the computing device **110C.** The computing device **110C** may generate the initial manifest file based on the request. The computing device **110C** may send the initial manifest file to the computing device **110F** (e.g., via the computing device **110B** and/or the computing device **110E**).

The initial manifest file may be sent to the computing device **110F** at a first time when one or more segments are available for delivery/output and the content is initially requested (e.g., for output, recording, or both). The initial manifest file may comprise information associated with the content and/or a segment(s) thereof. For example, the initial manifest file may comprise a Period element(s), an AdaptationSet element(s), a Representation element(s), a SegmentTemplate element(s), and/or a ContentProtection element(s), etc. The initial manifest file may need to be updated when new segments are available for delivery/output (e.g., newly transcoded, encoded, packaged, etc.). The subsystem **103** may determine/generate an update to the initial manifest file when the new segments are received via the source stream **102** (e.g., real-time or near real-time reception of linear/live content).

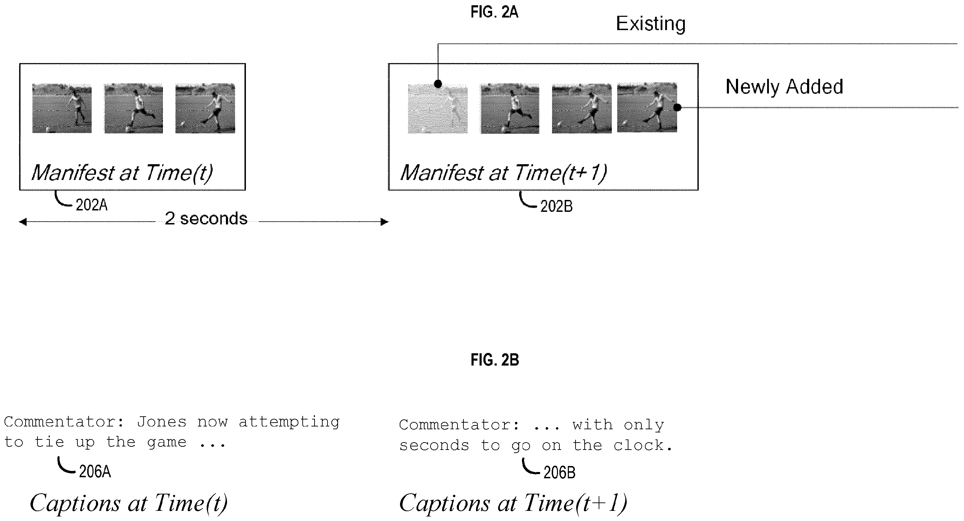

For example, the initial manifest file may need to be updated when new segments or portions of the content item are available for delivery/output. **FIG. 2A** shows a graphical representation of a portion of an initial manifest file **202A** for a content item at time (*t*) (e.g., a first manifest file). The portion of the initial manifest file **202A** shows three portions of the content item, which may correspond to a duration of roughly 2 seconds. **FIG. 2A** also shows a graphical representation of a manifest update **202B** for the content item at time (*t*+*1*) (e.g., an update to the first manifest file). The portion of the manifest update **202B** indicates the first portion of the content item included in **202A** (e.g., an existing portion) may not be included in **202B.** The portion of the manifest update **202B** also indicates a new portion of the content item not included in **202A** may be included in **202B.** Content data related to the newly-added portion may be included in the manifest update **202B** rather than sending an entirely new manifest file. The manifest update **202B** may allow a client device (e.g., the computing device **110F**) to update the manifest file **202A.** The manifest update **202B** may therefore be considered as a manifest update file (e.g., a "patch" file), which may convey the change(s), difference(s), etc., in the content (e.g., the newly-added portion) and it may, in some examples, exclude any standard (e.g., boilerplate) content data within the manifest file **202A** previously received.

Captions data, similarly to manifest files, may need to be updated when new captions data becomes available for new segments/portions of a content item. **FIG. 2B** shows a graphical representation of a portion of first captions data **206A** for the content item at time (*t*). The first captions data **206A** may correspond to the portions of the content item associated with the initial manifest file **202A** shown in **FIG. 2A. FIG. 2B** also shows a graphical representation of second captions data **206A** for the content item at time (*t*+*1*). The second captions data **206B** may correspond to the portions of the content item associated with the manifest update **202B.** Captions data related to the newly-added portion may be conveyed to the client device in a captions update, as further described herein.

Existing solutions for generating and providing manifest file updates and captions updates may require a significant amount of computing resources and network traffic. For example, some existing solutions may provide superfluous/redundant content data. In other examples of the existing solutions, manifest files and captions data may be updated (e.g., "patched") rather than being replaced entirely with new manifest files and new captions data (e.g., for new content segments). However, the framework for updating/patching used by these existing solutions may still include superfluous/redundant content data. The system **100** described herein may be configured to provide improved methods of updating content data.

The system **100** may generate updates to content data as Extensible Markup Language (XML) files. For example, a manifest update for a content item may comprise an XML file that conveys any change(s), difference(s), etc., between a first manifest file for the content item and a new manifest file that includes content data for new segments. XML Path language (XPath) selectors may be used to determine which portion(s) of the first manifest file is/are to be updated (e.g., where new content data is to be inserted into the first manifest file). Existing solutions that use XML files for manifest updates use three main XML operations: add, replace, and remove. In addition to these existing XML operations, the system **100** may be configured to include an XML "copy" operation. This copy operation may comprise two arguments: (1) an XPath expression identifying a particular XML element(s) within a manifest file to copy (a "source element(s)") and (2) an XPath expression identifying a target element(s). The copy operation may result in a copy of the source element(s) inserted as children of the target element(s).

The copy operation may, as one example, be used to add a new Period to an existing manifest file (e.g., the first manifest file). For example, given Period A (existing) and Period B (new), and given that these are continuous Periods, a difference between the two Periods may be found in a number of SegmentTemplate elements within the manifest file (e.g., SegmentTemplate elements that are not common/shared between the two Periods). Similarly, if there are a number of advertisement periods between the two Periods, then the Period A and its (content-wise) continuation (Period B) may be very similar. Using the copy operation described herein, the system **100** may add Period B in a manner that is less compute-intensive than simply using the XML "add" command to add Period B in its entirety to the manifest file. The copy operation may be used to replace values of attributes within Period A and/or modify element(s) within Period A containing segment, event, and timing information, such as EventStream, SegmentTemplate, and SegmentBase, etc. As noted above, existing solutions for updating manifest files may include superfluous/redundant content data (e.g., standard/boilerplate content data). In contrast to those existing solutions, the copy operation may result in a manifest update that conveys the differences between the two Periods but exclude, for example, content data this is common/shared between the two Periods. This may result in not only computational savings but also lesser amount of network traffic, network latency, etc.

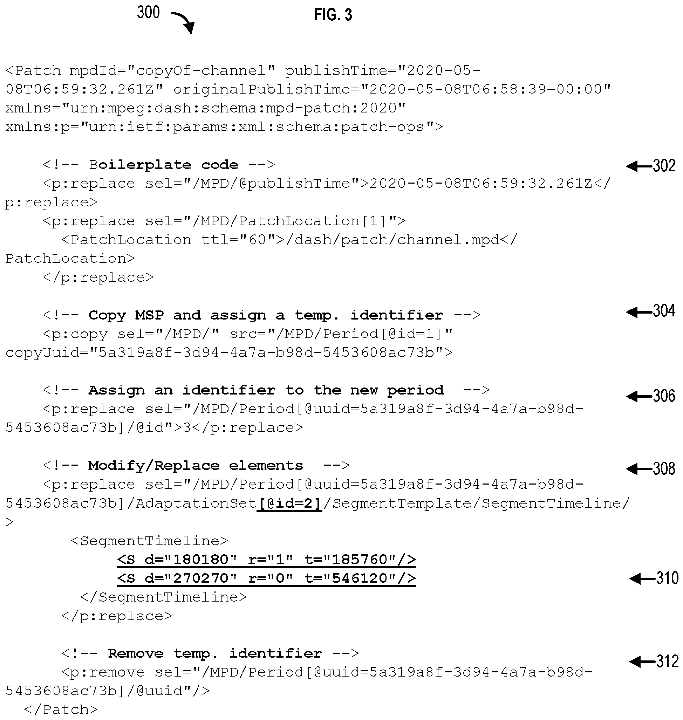

**FIG. 3** shows an example manifest update **300.** The manifest update **300** may comprise new content data that may not have been included within an a first manifest file for a content item, such as content data for newly-available segments as described herein. For explanatory purposes only, the computing device **110C** is described as the one that generates the manifest update **300;** however, the manifest update **300** may be generated by any of the computing devices shown in **FIG. 1****.** The manifest update **300** may comprise portions **302-312.** The portion **302** may comprise boilerplate code, which may be standard depending on a format of the manifest update **300.** The remaining portions **304-312** are further described herein.

The copy operation described above, as well as one or more other operations (e.g., XML operations), may be used to generate the manifest update **300.** The portion **304** may be associated with code for copying a most similar period (MSP) from the first manifest file into the manifest update **300** (e.g., a source period). For example, the MSP may be the Period A described above, and the new content data reflected in the manifest update **300** may be the Period B described above. The computing device **110C** may duplicate/copy the MSP from the first manifest file and store it within a "new" manifest file to use as a base for the manifest update **300.** This "new" manifest file may comprise a data structure that is similar to an XML-based "diff' (difference) document that contains one or more operation elements, namespace declarations, and any other document/content changes that may be needed to update/patch a target XML document - in this example, the first manifest file. In some examples, the computing device **110C** may use one or more XML difference algorithms when generating the manifest update **300.**

The first manifest file may comprise more than one Period element that may serve as the MSP for creating a "copy script" to implement the copy operation and to generate the manifest update **300.** The number of characters in the copy script may be considered a "cost" from a computing perspective (e.g., more characters may mean more computing resources are required and a higher "cost"). The computing device **110F** may determine a copy script cost for each Period element in the first manifest file to determine which Period element may serve as the MSP. For example, the MSP be a Period element with a lowest cost copy script. When determining the lowest cost copy script, the computing device **110F** may evaluate each Period element in the first manifest file to determine a cost for replacing child elements and/or attribute values versus a cost for modifying each. For example, for every SegmentTimeline element within each Period, there will be a cost of replacing the whole element versus a cost for modifying/replacing a number of changed elements/attributes. The cost for replacing versus modifying may calculated as a number of add, replace, and/or remove operations that are needed and/or as the cost of the above in characters or a combination thereof.

In some examples, the new Period element to be included in the manifest update **300** may comprise a SupplementalProperty element with an identifier indicating which Period from the first manifest file that the new Period continues. In such examples, the computing device **110F** may determine the MSP is the Period identified by the SupplementalProperty element. In other examples, period continuity may not be signaled in the new Period (e.g., the new Period element may not include the SupplementalProperty element). However, the new Period element may comprise an AssetIdentifier element. In such examples, the computing device **110F** may scan (e.g., loop over) the first manifest file to identify an existing Period element comprising the AssetIdentifier element to use as the MSP. In further examples, the new Period element may not include the SupplementalProperty element or the AssetIdentifier element. In these further examples, the computing device **110F** may scan (e.g., loop over) the first manifest file and identify the MSP as the Period element in the first manifest file that comprises a largest number of matching values of AdaptationSet@id values, a number of similar video and audio representations, matching codec strings, a combination thereof, and/or the like. Additionally, or in the alternative, a Period element may contain Event elements carrying content identifiers such as an advertisement identifier(s), an EIDR (entertainment identifier registry) identifier(s), etc. These Event elements may be used to identify/determine the MSP. For example, the computing device **110F** may scan (e.g., loop over) the first manifest file and identify the MSP as the Period element in the first manifest file that comprises a largest number of matching values of these Event elements within the new Period element.

As described herein, the computing device **110C** may duplicate/copy the MSP from the first manifest file and store it within the "new" manifest file to use as a base for the manifest update **300.** The portion **304** may comprise a copy operation for adding the MSP to the "new" manifest file. The computing device **110C** may assign a temporary identifier to the MSP, which is shown in **FIG. 3** at **304.** The computing device **110C** may then assign a unique identifier to the MSP, which is shown in **FIG. 3** at **306.** The unique identifier may comprise a universally unique identifier (UUID) attribute, a DASH identifier, DASH attribute, and/or the like. Once assigned the unique identifier, the MSP may be considered as a "new" Period element.

The computing device **110C** may modify (or replace) elements and attributes within the MSP based on the elements and attributes within the new content data/new Period (e.g., the Period B described above). For example, as shown in **FIG.** 3 at **308** and **310,** the computing device **110C** may modify (or replace) SegmentTimeline elements and attributes within the MSP (indicated as "Period 1" in **FIG. 3**) based on corresponding values within the new Period (indicated as "Period 3" in **FIG. 3**). The computing device **110C** may then remove the temporary identifier, as shown in **FIG. 3** at **312.** The manifest update shown in **FIG. 3** may be a result of these operations performed by the computing device **110C.** The manifest update may then be provided to a requesting client device (e.g., the computing device **110F**) and/or stored (e.g., in the storage medium **120C**).

As noted above, the computing device **110C** may modify (or replace) elements and attributes within the MSP based on the elements and attributes within the new content data/new Period. The computing device **110C** may evaluate the MSP to determine a cost for replacing the elements and/or attribute values versus a cost for modifying each. That is, the computing device **110C** may determine whether to modify the MSP attribute-by-attribute (e.g., those attributes/values needing to be updated) or to simply add the new Period (e.g., the Period B above) entirely. In some examples, to make this decision/determination, the computing device **110C** may use one or more XML difference algorithms to compare the MSP to the new Period.

The computing device **110C** may determine a first copy script cost (e.g., in number of text characters) for adding the new Period via a manifest update that uses a single XML "add" command containing the complete new Period. The computing device **110C** may determine the first copy script cost in terms of a number of text characters, lines of code, etc. For example, the computing device **110C** may determine the first copy script cost by applying the one or more XML difference algorithms to the MSP and the new Period (e.g., the Period B from above). The computing device **110C** may determine a second copy script cost for modifying the MSP (e.g., modifying and/or replacing portions of the MSP based on the new Period). For example, the computing device **110C** may determine the second copy script cost in terms of a number of text characters, lines of code, and/or operations. The computing device **110C** may determine the second copy script cost by applying the one or more XML difference algorithms to the MSP and the new Period (e.g., the Period B from above). The computing device **110C** may use the lowest cost copy script for generating the manifest update.

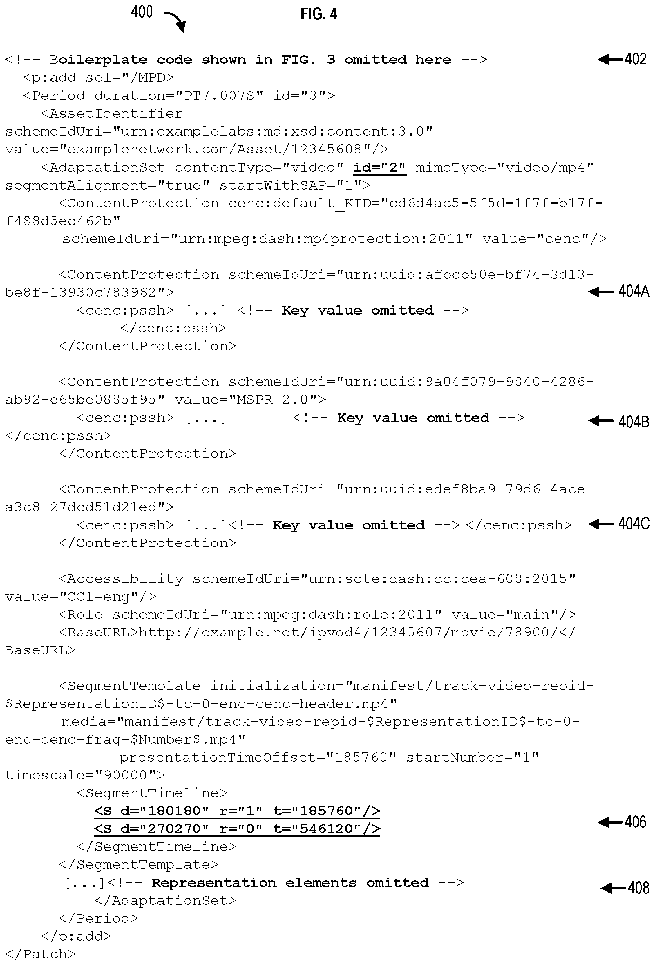

**FIG. 4** shows an example manifest update **400** that the computing device **110C** may generate if the first copy script is used (e.g., in examples where the entirety of the new Period is included in the manifest update). Several portions of the manifest update **400** are not shown in **FIG. 4** for brevity and ease of view. For example, a portion **402** of the manifest update **400** may comprise the same boilerplate code as the portion **302** of the manifest update **300,** which is not shown in **FIG. 4****.** Portions **404A-404C** of the manifest update **400** may comprise digital rights management (DRM) keys (e.g., DRM keys for the new Period) that are not shown in **FIG. 4****.** Portion **408** of the manifest update **400** may comprise representation elements that are part of the new Period, which are not shown in **FIG. 4****.**

Portion **406** of the manifest update **400** may capture the difference(s) between the MSP used as a base for the manifest update **400** (e.g., Period A from above) and the new Period (e.g., Period B from above). The portion **406** of the manifest update **400** may correspond to the portion **310** of the manifest update **300.** For example, the portion **406** of the manifest update **400** may comprise the same SegmentTimeline elements and attribute values as the portion **310** of the manifest update **300,** which correspond to SegmentTimeline elements and attributes from the MSP that were modified (or replaced) using the copy script described above (e.g., elements and attributes post-modification).

As a result, the portion **406** of the manifest update **400** may comprise the difference(s) (e.g., the new Period) to be conveyed in the manifest update **400.** As shown by **FIGS. 3** and **4****,** and when considering the amount of code omitted from **FIG. 4** for brevity and ease of view, the amount of data and operations required for generating the manifest update **400** using the first copy script may, in some examples, be significantly more than what may be required when using the second copy script to modify the MSP (e.g., as in the manifest update **300**)**.** In these scenarios, the resulting data size of the manifest update **400,** as well as the associated computational resources required for generating, processing, and sending the manifest update **400,** may be significantly higher than those required for generating, processing, and sending the manifest update **300.**

The computing device **110C** may determine to use the first copy script over the second copy script - or vice-versa - based on a threshold (or lowest possible) number of operations that would be required for modifying the MSP, a threshold (or lowest possible) number of characters of resulting text/code (e.g., characters within a resulting manifest update), a threshold (or lowest possible) number of lines of resulting text/code (e.g., lines within a resulting manifest update), a threshold computing complexity, a combination thereof, and/or the like. Each such "threshold" may be set, adjustable, fluctuate with traffic/demand, etc.

In some examples, the first copy script cost (e.g., using a single "add" command) may be similar to the second copy script cost (e.g., modifying the MSP). In such examples, the computing device **110C** may determine that the first copy script should be used. For example, the computing device **110C** may determine that the first copy script should be used due to a larger number of operations that may be required for the second copy script compared to the number of operations that may be required for the first copy script cost (e.g., thereby requiring more computing resources to use the second copy script cost). The computing device **110C** may make this determination by comparing the first copy script cost to a result of dividing the second copy script cost by a value of a function(s) of a number of operations in the second copy script. For example, the function(s) may comprise a difference function, a distance function (e.g., a Levenshtein distance function, etc.), a matching function, a similarity function, etc., and the function(s) may use the number of operations (e.g., one or more operations) in the second copy script as an input. In further examples where the manifest update **300** is provided to client devices using lossless compression (e.g., HTTP response compression using GZIP or Brotli), the comparison of the first copy script cost and the second copy script cost may be determined post-compression.

After determining whether to use the first copy script or the second copy script, the computing device **110C** (or another computing device of the system **100**) may generate a manifest update file (e.g., the manifest update **300,** the manifest update **400,** a manifest "patch" file, etc.). As described herein, the computing device **110F** may have previously requested and received the initial manifest file (e.g., from/via the computing device **110C,** the computing device **110D,** etc.) The computing device **110C** (or another computing device of the system **100**) may determine that the initial manifest file needs to be updated when the new segments are determined to be available for delivery/output. As another example, the computing device **110C** (or another computing device of the system **100**) may determine that the initial manifest file needs to be updated based on a request for a new/current manifest file (or a manifest update file) for the content item. Other examples are possible as well, such as a scheduled update protocol, etc. The computing device **110C** (or another computing device of the system **100**) may send the manifest update file to the computing device **110F** (e.g., via the computing device **110B** and/or the computing device **110E**)**.** In other examples, the computing device **110C** (or another computing device of the system **100**) may update the initial manifest file using the manifest update file, which may result in a second manifest file (e.g., a new/current manifest file) that facilitates access to the new segments.

Additionally, or in the alternative, the computing device **110C** (or another computing device of the system **100**) may generate the second manifest file without updating the initial manifest file (e.g., the second manifest file may be generated in the same manner as the initial manifest file). For example, the computing device **110C** (or another computing device of the system **100**) may generate the second manifest file without updating the initial manifest file based on one or more of the following: a determination that generating the manifest update file will require more than a threshold amount of compute/memory resources; a determination that a cost for generating the manifest update file (e.g., the first copy script and/or the second copy script) is above a threshold cost; or a determination that generating the manifest update file is associated with a level of complexity/cost that is above a threshold amount. Each such "threshold" may be set, adjustable, fluctuate with traffic/demand, etc. The initial manifest file may comprise an indication, signaling, etc., that is configured to inform a recipient client device(s) (e.g., the computing device **110F**) that a request for a new/current manifest file (or a manifest update file) may result in receiving the second manifest file (e.g., an updated version of the initial manifest file or a newly-generated manifest file), the manifest update file, or both.

The computing device **110C** (or another computing device of the system 100) may send the second manifest file and/or the manifest update file to the computing device **110F** (e.g., via the computing device **110B** and/or the computing device **110E**). The computing device **110F** may receive the manifest update file and/or the second manifest file. The computing device **110F** may update the initial manifest file using the manifest update file, which may result in an updated manifest file. The computing device **110F** may use the updated manifest file to generate a request(s) for a new segment(s) of the content item. Additionally, or in the alternative as the case may be, the computing device **110F** may discard the initial manifest file and use the second manifest file to generate a request(s) for a new segment(s) of the content item.

In addition to manifest files/manifest update files, the system **100** may generate updates to other types of content data. For example, the system **100** may generate updates to captions data, such as by generating captions update files (e.g., using XML methods/files), also referred to herein as "captions update segments." Captions data, similarly to manifest files, may need to be updated when new captions data becomes available for new segments/portions of a content item. Captions data may include, for example, any timed and/or synchronized display of alphanumeric and/or symbolic characters during output of a content item for purposes of accessibility, translation, and/or any other purpose (referred to herein as "timed text). The system **100** may generate captions data, for example, to include timed text for real-time subtitling of foreign-language content items, timed text/closed captioning for people lacking audio devices or having hearing impairments, timed text for karaoke, timed text for scrolling news items, timed text for teleprompter applications, etc.

Timed Text Markup Language (TTML) is an example markup language/format for timed text that may be used by the system **100** for distributing captions data. TTML may be used in standards such as ATSC 3.0, DVB DASH, DASH-IF IOP guidelines, SCTE 214, etc. TTML files may comprise textual information that may be used for captions data as well as for an interchange format among other captions data formats.

The system **100** may be configured to generate captions updates for captions data for content items that are based on the TTML format. For example, the system **100** may generate captions update files to include new captions data (e.g., for new segments of content items, etc.). The captions update files generated by the system **100** may be based on TTML while representing an improvement to existing solutions. For example, existing solutions typically send entirely new TTML files when captions data needs to be updated. However, these existing solutions require a high amount of computing resources and networking resources, because TTML files are generally highly redundant and repeat the same information (e.g., declarations and layout) for each associated segment of a content item. For example, for live/linear content items, entire TTML files are typically sent according to these existing solutions when captions data needs to be updated.

Captions data may be updated (e.g., "patched") by the system **100** rather than being replaced entirely with new captions files for new captions data (e.g., for new segments, etc.). For example, the system **100** may generate captions update files that exclude common captions data that client devices may have already received with a respective initialization segment for a respective content item. The captions update files generated by the system **100** may be based on an XML patch framework, for example. The captions update files generated by the system **100** may be significantly smaller and require significantly less resources to generate, process, and/or send as compared to the existing solutions described above (e.g., as compared to sending an entire TTML file). In some examples, the captions update files generated by the system **100** may be compressed when being transmitted/sent (e.g. GZIP or Brotli).

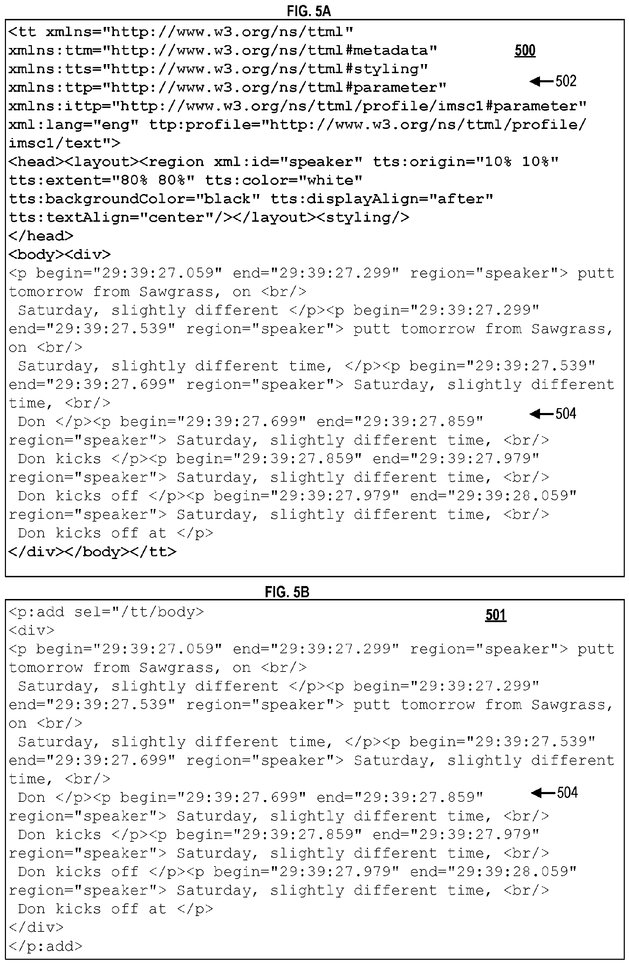

**FIG. 5A** shows an example captions data **500** for a live/linear content item, such as live/linear content airing on a linear content channel. A portion **502** of the captions data **500** may represent common captions data, such as captions data that may be included in all captions data files for the content item (e.g., for content airing on the linear content channel). Client devices (e.g., the computing device **110F**) may receive an initialization segment when requesting the content item, tuning to the linear content channel, etc. The initialization segment may comprise the common captions data represented by the portion **502** of the captions data **500.** A portion **504** of the captions data **500** may comprise captions data for a segment(s) of the content item (referred to herein as "first captions data **504**"). The common captions data (e.g., the portion **502**) of the captions data **500** may represent a significant amount of an overall size of the captions data **500.** For example, the overall size of the captions data **500** may comprise 1292 bytes, and the common captions data may comprise 618 bytes. As another example, assuming the captions data **500** is compressed, the overall size of the captions data **500** may comprise 436 bytes, and the common captions data may comprise 295 bytes.

The system **100** may generate a captions update file for the content item associated with the captions data **500.** For example, the computing device **110B** (or another computing device of the system **100**) may generate the captions update file when new segments of the content item and/or the linear content channel become available. As another example, the computing device **110B** (or another computing device of the system **100**) may generate a captions update file based on a request received from a client device(s), such as the computing device **110F.** Other examples are possible as well, such as a scheduled update protocol, etc. Captions update files generated by the system **100** may be significantly smaller and require significantly less resources than captions update files generated using the aforementioned existing solutions.

**FIG. 5B** shows example captions update data **501.** The computing device **110F** may receive an initialization segment when requesting the content item and/or tuning to the linear content channel described above with reference to **FIG. 5A****.** The initialization segment may comprise the first captions data **504,** which may represent the common captions data for the content item/linear content channel. For example, the initialization segment may comprise and/or be sent with a captions file (e.g., a TTML document/file) that comprises the common captions data (e.g., the portion **502**)**.** The captions update data **501** may represent part of - or an entirety of - a captions update file for the content item. The captions update data **501** may exclude/omit the common captions data. For example, the captions update data **501** may exclude/omit the common captions data since it was provided with the initialization segment. The captions update data **501** may therefore comprise a significantly smaller data size and require significantly less resources to generate, process, and/or send as compared to captions updates generated using the existing solutions described herein.

The captions update data **501** may be generated by the computing device **110B** (or another computing device of the system **100**) by applying one or more XML difference algorithms, which may or may not correspond to the one or more XML difference algorithms used when generating a manifest update as described above. For example, a new segment of the content item may comprise a new captions file (e.g., a new TTML document/file). The computing device **110B** (or another computing device of the system **100**) may apply the one or more XML difference algorithms to the new captions file and the initial/first captions file associated with the initialization segment. The one or more XML difference algorithms may capture any difference(s) between the captions data within the new captions file for the new segment and the captions data within the initial/first captions file.

In some scenarios, the captions update data **501** may be generated by the computing device **110B** (or another computing device of the system **100**) without using the one or more XML difference algorithms. For example, the computing device **110B** (or another computing device of the system **100**) may be configured such that the captions update data **501** includes all portions of the new captions file, aside from the common captions data provided with the initialization segment. The computing device **110B** (or another computing device of the system 100) may be further configured to determine whether any portion(s) of the common captions data, as indicated by the new captions file, has changed relative to the common captions data within the initial/first captions file associated with the initialization segment. Any changes/differences between the common captions data within the new captions file and the common captions data within the initial/first captions file may be included in the captions update data **501.**

The computing device **110B** (or another computing device of the system **100**) may send the captions update data **501** to the computing device **110F.** For example, the computing device **110B** (or another computing device of the system **100**) may send the captions update data **501** to the computing device **110F** as a captions update file. The computing device **110F** may receive the captions update file (e.g., the captions update data **501**). The computing device **110F** may update the captions file that was received with the initialization segment using the captions update file, which may result in an updated captions file. The computing device **110F** may use the updated captions file to render closed captioning, subtitles, etc.

In some examples, the live/linear content item and/or the linear content channel described herein may deliver content using a low-latency DASH protocol, a low-latency HLS protocol, etc. In such scenarios, segments of the content item may be sent to client devices in chunks. For example, a first chunk of a first segment may comprise and/or be sent with the initial/first captions file and the initialization segment. Subsequent chunks of the first segment may comprise and/or be sent with corresponding captions update data (e.g., captions update data **501**) and/or corresponding captions update files relative to the initial/first captions file provided with the first chunk. The client devices (e.g., the computing device **110F**) may use the corresponding captions update data and/or corresponding captions update files to render closed captioning, subtitles, etc., in a similar manner as described above.

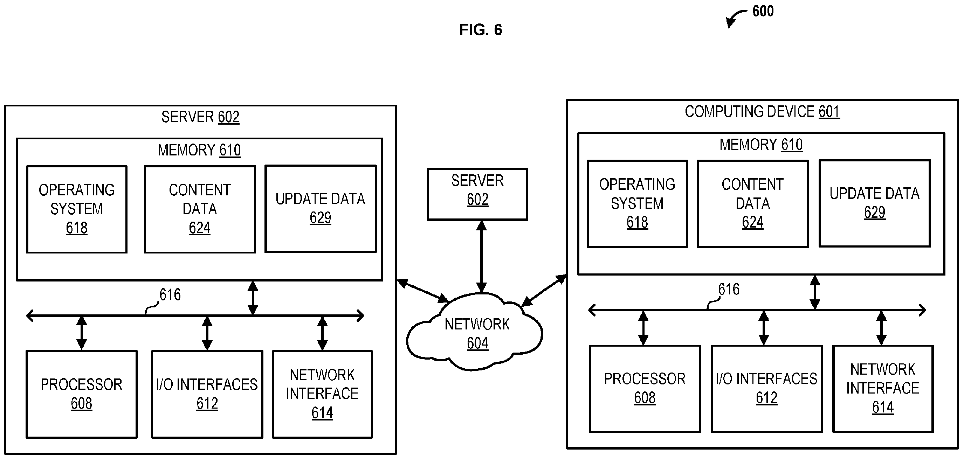

The present methods and systems may be computer-implemented. **FIG. 6** shows a block diagram depicting a system/environment **600** comprising nonlimiting examples of a computing device **601** and a server **602** connected through a network **604.** Either of the computing device **601** or the server **602** may be a computing device, such as any of the computing devices **110A-110F** of the system **100** shown in **FIG. 1****.** In an aspect, some or all steps of any described method may be performed on a computing device as described herein. The computing device **601** may comprise one or multiple computers configured to store one or more of update data **629** (e.g., manifest update data, captions update data, etc.), and/or the like. For example, the update data **629** may comprise a storage medium, such as any of the storage media **120B-120E** described herein. The server **602** may comprise one or multiple computers configured to store content data **624** (e.g., portions of a content item and related metadata). For example, the content data **624** may comprise a storage medium, such as any of the storage media **120B-120E** described herein. Multiple servers **602** may communicate with the computing device **601** via the through the network 604.

The computing device **601** and the server **602** may be a digital computer that, in terms of hardware architecture, generally includes a processor **608,** system memory **610,** input/output (I/O) interfaces **612,** and network interfaces **614.** These components (**608, 610, 612,** and **614**) are communicatively coupled via a local interface **616.** The local interface **616** may be, for example, but not limited to, one or more buses or other wired or wireless connections, as is known in the art. The local interface **616** may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor **608** may be a hardware device for executing software, particularly that stored in system memory **610.** The processor **608** may be any custom made or commercially available processor, a central processing unit (CPU), an auxiliary processor among several processors associated with the computing device **601** and the server **602,** a semiconductor-based microprocessor (in the form of a microchip or chip set), or generally any device for executing software instructions. During operation of the computing device **601** and/or the server **602,** the processor **608** may execute software stored within the system memory **610,** to communicate data to and from the system memory **610,** and to generally control operations of the computing device **601** and the server **602** pursuant to the software.

The I/O interfaces **612** may be used to receive user input from, and/or for sending system output to, one or more devices or components. User input may be received via, for example, a keyboard and/or a mouse. System output may be output via a display device and a printer (not shown). I/O interfaces **612** may include, for example, a serial port, a parallel port, a Small Computer System Interface (SCSI), an infrared (IR) interface, a radio frequency (RF) interface, and/or a universal serial bus (USB) interface.

The network interface **614** may be used to transmit and receive from the computing device **601** and/or the server **602** on the network **604.** The network interface **614** may include, for example, a 10BaseT Ethernet Adaptor, a 10BaseT Ethernet Adaptor, a LAN PHY Ethernet Adaptor, a Token Ring Adaptor, a wireless network adapter (e.g., WiFi, cellular, satellite), or any other suitable network interface device. The network interface **614** may include address, control, and/or data connections to enable appropriate communications on the network **604.**

The system memory **610** may include any one or combination of volatile memory elements (e.g., random access memory (RAM, such as DRAM, SRAM, SDRAM, etc.)) and nonvolatile memory elements (e.g., ROM, hard drive, tape, CDROM, DVDROM, etc.). Moreover, the system memory **610** may incorporate electronic, magnetic, optical, and/or other types of storage media. Note that the system memory **610** may have a distributed architecture, where various components are situated remote from one another, but may be accessed by the processor 608.

The software in system memory **610** may include one or more software programs, each of which comprises an ordered listing of executable instructions for implementing logical functions. In the example of **FIG. 6****,** the software in the system memory **610** of the computing device **601** may comprise the update data **629,** the content data **624,** and a suitable operating system (O/S) **618.** In the example of **FIG. 6****,** the software in the system memory **610** of the server **602** may comprise the update data **629,** the content data **624,** and a suitable operating system (O/S) **618.** The operating system **618** essentially controls the execution of other computer programs and enables scheduling, input-output control, file and data management, memory management, and communication control and related services.

For purposes of illustration, application programs and other executable program components such as the operating system **618** are shown herein as discrete blocks, although it is recognized that such programs and components may reside at various times in different storage components of the computing device **601** and/or the server **602.** An implementation of the system/environment **600** may be stored on or transmitted across some form of computer readable media. Any of the disclosed methods may be performed by computer readable instructions embodied on computer readable media. Computer readable media may be any available media that may be accessed by a computer. By way of example and not meant to be limiting, computer readable media may comprise "computer storage media" and "communications media." "Computer storage media" may comprise volatile and non-volatile, removable and non-removable media implemented in any methods or technology for storage of information such as computer readable instructions, data structures, program modules, or other data. Exemplary computer storage media may comprise RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

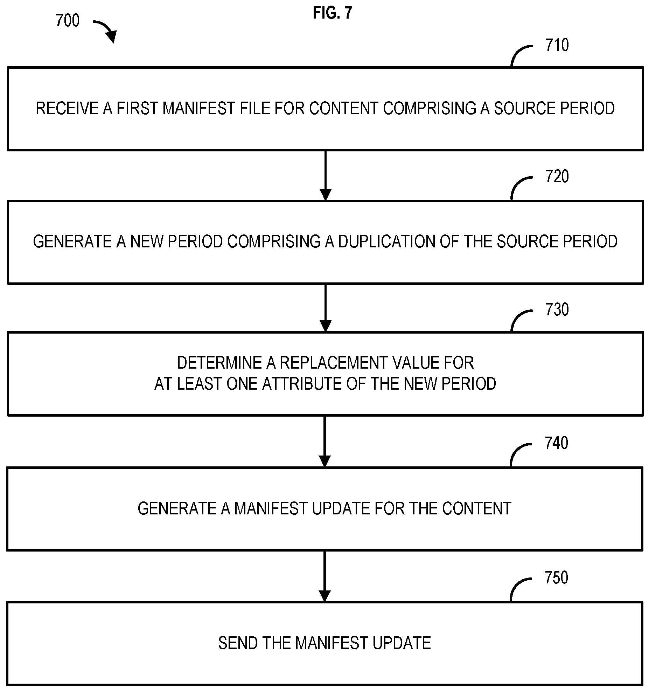

**FIG. 7** shows a flowchart of an example method **700** for updating content data. The method **700** may be performed in whole or in part by a single computing device, a plurality of computing devices, and the like. For example, some or all steps of the method **700** may be performed by at least one of the computing devices **110A-110F** shown in **FIG. 1****.** For ease of explanation, the steps of the method **700** are described herein as being performed by a single computing device. However, it is to be understood that some steps of the method **700** may be performed by a first computing device, while other steps of the method **700** may be performed by another computing device(s).

At step **710,** the first computing device may receive a first manifest file for content. The first manifest file may comprise a plurality of period elements associated with the content (each of which may be referred to herein as "periods" or a "period"). A second manifest file may comprise an additional period associated with the content. The additional period may be associated with a new content segment(s) available for delivery and/or output. The first computing device may determine which period of plurality of periods within the first manifest is most similar to the additional period. The first computing device may determine that the most similar period may serve as a source period for a manifest update for the content.

At step **720,** the first computing device may generate a new period. The first computing device may generate the new period based on the source period. For example, the first computing device may generate the new period by duplicating the source period. The first computing device may generate the new period by appending, to a copy of the first manifest file, the duplication of the source period as the new period. The first computing device may generate the new period by generating, for the duplication of the source period, a placeholder attribute, and the new period may comprise the placeholder attribute. The first computing device may generate the new period by generating, for the duplication of the source period, a unique identifier, and the new period may comprise the unique identifier.

At step **730,** the first computing device may determine a replacement value for at least one attribute of the new period. For example, the first computing device may determine the replacement value based on the additional period within the second manifest file. The additional period of the second manifest file may comprise at least one additional attribute. The first computing device may determine the replacement value for the at least one attribute of the new period based on a value of the at least one attribute of the additional period and based on a value of the at least one attribute of the new period. The replacement value may comprise a difference between the value of the at least one attribute of the additional period and the value of the at least one attribute of the new period. The at least one attribute of the additional period and the at least one attribute of the new period may each comprise at least one segment element attribute (e.g., as shown in the portion **406** of **FIG. 4**).

At step **740,** the first computing device may generate a manifest update for the content. For example, the first computing device may generate the manifest update based on the new period and the first manifest file. The manifest update may comprise the new period, and the new period may comprise the replacement value for the at least one attribute of the new period. The manifest update may identify at least one segment of the new period. The at least one segment may comprise a newly encoded and/or newly available portion of the content. Additionally, or in the alternative, the at least one segment may comprise an advertisement associated with the content. At step **750,** the first computing device may send the manifest update to at least one user device (e.g., the client device **110F**). The manifest update may facilitate access to the at least one segment by the at least one user device.

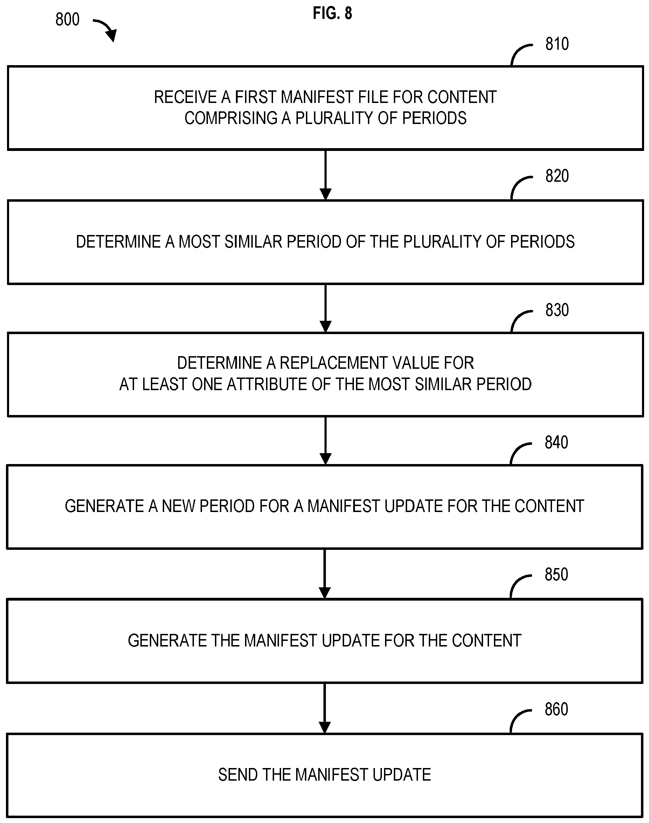

**FIG. 8** shows a flowchart of an example method **800** for updating content data. The method **800** may be performed in whole or in part by a single computing device, a plurality of computing devices, and the like. For example, some or all steps of the method **800** may be performed by at least one of the computing devices **110A-110F** shown in **FIG. 1****.** For ease of explanation, the steps of the method **800** are described herein as being performed by a single computing device. However, it is to be understood that some steps of the method **800** may be performed by a first computing device, while other steps of the method **800** may be performed by another computing device(s).

At step **810,** the first computing device may receive a first manifest file for content. The first manifest file may comprise a plurality of period elements associated with the content (each of which may be referred to herein as "periods" or a "period"). A second manifest file may comprise an additional period associated with the content. The additional period may be associated with a new content segment(s) available for delivery and/or output.

At step **820,** the first computing device may determine a most similar period of the plurality of periods. The first computing device may determine the most similar period based on the plurality of periods and based on an additional period within the second manifest file. The first computing device may determine the most similar period based on at least one difference algorithm (e.g., an XML difference algorithm), which may be used to determine an amount of difference between attributes of the additional period and attributes of each period of the plurality of periods. The first computing device may determine the most similar period based on the amount of difference between the attributes of the additional period and attributes of a first period of the plurality of periods. The most similar period may comprise the first period.

The first computing device may determine a copy script cost for each period of the plurality of periods. The most similar period may be determined based on the copy script cost for each period of the plurality of periods. The first computing device may determine a lowest copy script cost based on the copy script cost for each period of the plurality of periods. The most similar period may be associated with the lowest copy script cost. The copy script cost for each period of the plurality of periods may be based on a quantity of characters of text/code. The lowest copy script cost may comprise a smallest quantity of characters.

At step **830,** the first computing device may determine a replacement value for at least one attribute of the most similar period. The first computing device may determine the replacement value based on the additional period and the most similar period. The first computing device may determine, based on an existing value of the at least one attribute of the most similar period, and based on a value of at least one attribute of the additional period, the replacement value for the at least one attribute of the most similar period.

At step **840,** the first computing device may generate a new period for a manifest update for the content. The first computing device may generate the new period based on the replacement value for the at least one attribute of the most similar period. The new period may comprise the replacement value for at least one attribute of the most similar period. At step **850,** the first computing device may generate the manifest update for the content. For example, the first computing device may generate the manifest update based on the new period. The manifest update may facilitate access to at least one segment of the content. At step **860,** the first computing device may send the manifest update to at least one user device (e.g., the client device **110F**). The at least one user device may generate a request for the at least one segment using manifest update.

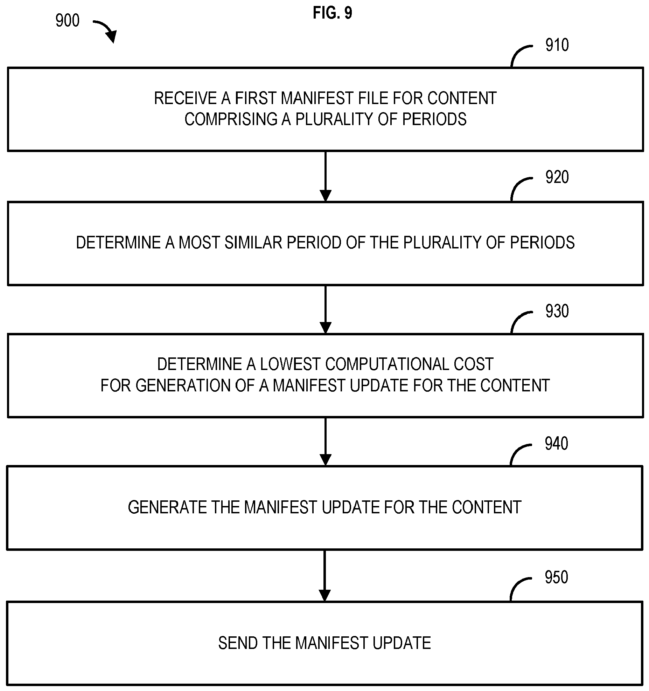

**FIG. 9** shows a flowchart of an example method **900** for updating content data. The method **900** may be performed in whole or in part by a single computing device, a plurality of computing devices, and the like. For example, some or all steps of the method **900** may be performed by at least one of the computing devices **110A-110F** shown in **FIG. 1****.** For ease of explanation, the steps of the method **900** are described herein as being performed by a single computing device. However, it is to be understood that some steps of the method **900** may be performed by a first computing device, while other steps of the method **900** may be performed by another computing device(s).

At step **910,** the first computing device may receive a first manifest file for content. The first manifest file may comprise a plurality of period elements associated with the content (each of which may be referred to herein as "periods" or a "period"). A second manifest file may comprise an additional period associated with the content. The additional period may be associated with a new content segment(s) available for delivery and/or output.

At step **920,** the first computing device may determine a most similar period of the plurality of periods. The first computing device may determine the most similar period based on the plurality of periods and based on an additional period within the second manifest file. The first computing device may determine the most similar period based on at least one difference algorithm (e.g., an XML difference algorithm), which may be used to determine an amount of difference between attributes of the additional period and attributes of each period of the plurality of periods. The first computing device may determine the most similar period based on the amount of difference between the attributes of the additional period and attributes of a first period of the plurality of periods. The most similar period may comprise the first period.

At step **930,** the first computing device may determine a lowest computational cost for generation of a manifest update for the content. The first computing device may determine the lowest computational cost based on the most similar period and the additional period. For example, the first computing device may determine a first computational cost for generation of the manifest update using a plurality of commands and a second computational cost for generation of the manifest update using a single command.

The first computing device may determine the first computational cost based on attributes of the additional period and attributes of the most similar period (e.g., as in the first copy script cost described herein). For example, first computing device may determine the first computational cost based on at least one of: a quantity of characters associated with the plurality of commands or a quantity of the plurality commands. The plurality of commands may comprise at least one add command, at least one remove command, and at least one replace command. The plurality of commands may be configured to assign values for the attributes of the additional period based on values of the attributes of the most similar period

The first computing device may determine the second computational cost based on the attributes of the additional period and the attributes of the most similar period (e.g., as in the second copy script cost described herein). For example, first computing device may determine the second computational cost based on a quantity of characters associated with the single command. The single command may be configured to add values for the attributes of the additional period to the manifest update. The first computing device may determine the lowest computational cost based on the first computational cost and the second computational cost (e.g., whichever is lower).

At step **940,** the first computing device may generate the manifest update for the content. For example, the first computing device may generate the manifest update based on the lowest computational cost and based on the first manifest file and the second manifest file. At step **950,** the first computing device may send the manifest update to at least one user device (e.g., the client device **110F**). The manifest update may facilitate access to at least one segment of the content identified by the additional period. The at least one segment may comprise a newly encoded portion of the content. The at least one segment may comprise an advertisement associated with the content. The at least one user device may generate a request for the at least one segment using manifest update.

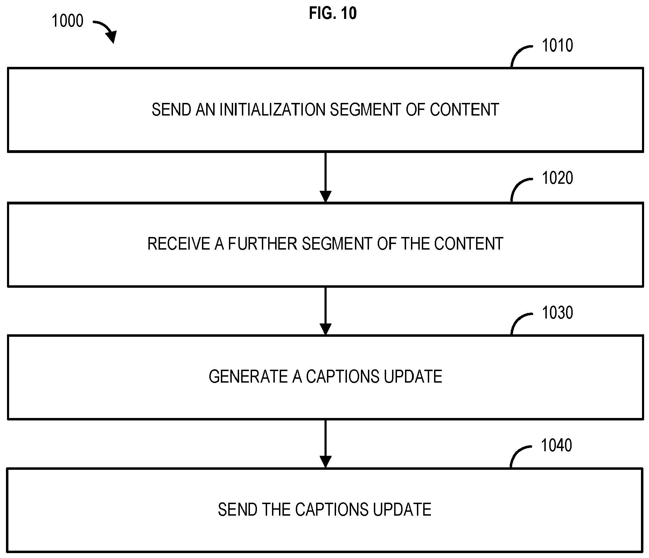

**FIG. 10** shows a flowchart of an example method **1000** for updating content data. The method **1000** may be performed in whole or in part by a single computing device, a plurality of computing devices, and the like. For example, some or all steps of the method **1000** may be performed by at least one of the computing devices **110A-110F** shown in **FIG. 1****.** For ease of explanation, the steps of the method **1000** are described herein as being performed by a single computing device. However, it is to be understood that some steps of the method **1000** may be performed by a first computing device, while other steps of the method **1000** may be performed by another computing device(s).

At step **1010,** the first computing device may send an initialization segment of content. The first computing device may send the initialization segment to a client device (e.g., the computing device **110F**). The initialization segment may comprise (or be sent with) first captions data. The first captions data may include some amount of uniform, standard captions data (referred to herein as "common captions data," such as namespace declarations, styling information, etc.).

A further segment of the content may become available for delivery/output. At step **1020,** the first computing device may receive the further segment. The further segment may comprise a newly encoded and/or newly available portion of the content. At step **1030,** the first computing device may generate a captions update (e.g., a captions update file, or a captions update segment). The captions update may be associated with the further segment. The captions update may include new captions data corresponding to the further segment (e.g., new lines of dialog, description, etc.). The captions update may exclude the common captions data that the client device already received with the initialization segment.

At step **1040,** the first computing device may send the captions update. For example, the first computing device may send the captions update as a captions update file to the client device. The client device may receive the captions update file. The client device may update the first captions data that was received with the initialization segment. For example, the client device may update the first captions data using the captions update file, which may result in an updated captions file. The client device may use the updated captions file to render closed captioning, subtitles, etc.

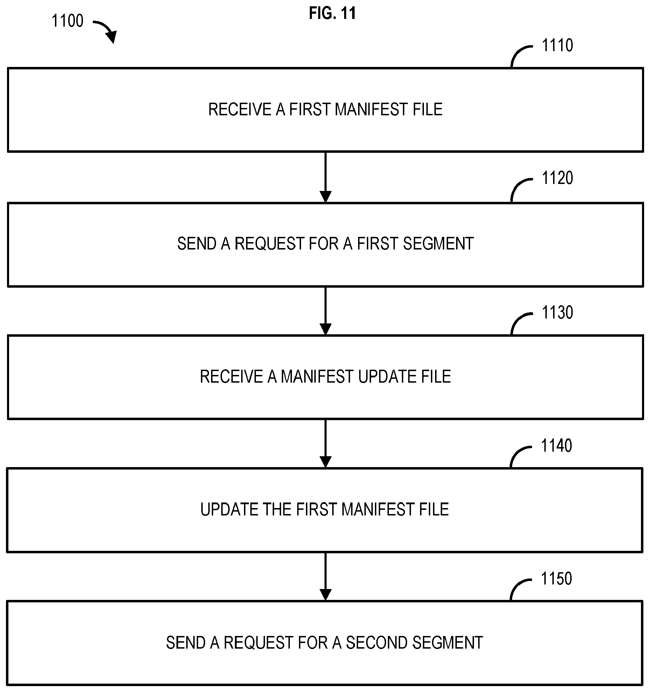

**FIG. 11** shows a flowchart of an example method **1100** for updating content data. The method **1100** may be performed in whole or in part by a single computing device, a plurality of computing devices, and the like. For example, some or all steps of the method **1100** may be performed by at least one of the computing devices **110A-110F** shown in **FIG. 1****.** For ease of explanation, the steps of the method **1100** are described herein as being performed by a single computing device (e.g., the computing device **110F**). However, it is to be understood that some steps of the method **1100** may be performed by a first computing device, while other steps of the method **1100** may be performed by another computing device(s).

At step **1110,** the first computing device may receive a first manifest file for content. The first manifest file may correspond to an initial manifest file as described herein. For example, the first computing device may request the first manifest file (e.g., the initial manifest file) from/via a second computing device (e.g., the computing device **110C,** the computing device **110D,** etc.), and the second computing device may send the first manifest file to the first computing device. At step **1120,** the first computing device may send a request for a first segment of the content. For example, the first computing device may generate the request for the first segment based on the first manifest file.

The second computing device (or another computing device of the system **100**) may determine that the first manifest file needs to be updated. For example, the second computing device may determine that the first manifest file needs to be updated when new segments for the content are determined to be available for delivery/output. As another example, the second computing device may determine that the first manifest file needs to be updated based on a request from the first computing device for a new/current manifest file (or a manifest update file) for the content. Other examples are possible as well, such as a scheduled update protocol, etc.

The first manifest file may comprise an indication, signaling, etc., that is configured to inform the first computing that a request for a new/current manifest file (or a manifest update file) may result in receiving a manifest update file. At step **1130,** the first computing device may receive the manifest update file. For example, the second computing device (or another computing device of the system **100**) may send the manifest update file to the first computing device in response to a request from the first computing device. Additionally, or in the alternative, the second computing device may send the manifest update file to the first computing device in response to determining that new segments for the content are available for delivery/output. Other examples are possible as well, such as a scheduled update protocol, etc.

At step **1140,** the first computing device may update the first manifest file. For example, the first computing device may update the first manifest file using the manifest update file. Updating the first manifest file using the manifest update file may result in a second manifest file. The second manifest file may correspond to updated manifest files as described herein. At step **1150,** the first computing device may send a request for a second segment of the content. For example, the first computing device may generate the request for the second segment based on the second manifest file. The second segment may comprise a new segment as described herein. For example, the second segment may comprise a segment that became available for delivery/output at some point after the first computing device received the first manifest file and/or sent the request for the first segment.

While specific configurations have been described, it is not intended that the scope be limited to the particular configurations set forth, as the configurations herein are intended in all respects to be possible configurations rather than restrictive. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of configurations described in the specification.

It will be apparent to those skilled in the art that various modifications and variations may be made without departing from the scope or spirit. Other configurations will be apparent to those skilled in the art from consideration of the specification and practice described herein. It is intended that the specification and described configurations be considered as exemplary only, with a true scope and spirit being indicated by the following claims.

## Claims

1. A method comprising:
receiving, by a computing device, a first manifest file for content, wherein the first manifest file comprises a source period;
generating, based on the source period, a new period; and
generating, based on the new period and the first manifest file, a manifest update for the content, wherein the manifest update facilitates access to the content.

2. The method of claim 1, wherein the new period comprises a duplication of the source period, and wherein generating the new period comprises at least one of:
appending, to a copy of the first manifest file, the duplication of the source period as the new period;
generating, for the duplication of the source period, a placeholder attribute, wherein the new period comprises the placeholder attribute; or
generating, for the duplication of the source period, a unique identifier, wherein the new period comprises the unique identifier.

3. The method of any one of claims 1 or 2, further comprising: determining, based on an additional period within a second manifest file for the content, a replacement value for at least one attribute of the new period, wherein the manifest update comprises the new period comprising the replacement value for the at least one attribute of the new period.

4. The method of claim 3, wherein determining the replacement value for the at least one attribute of the new period comprises:
receiving the second manifest file, wherein the additional period of the second manifest file comprises at least one additional attribute; and
determining, based on a value of the at least one attribute of the additional period, and based on a value of the at least one attribute of the new period, the replacement value for the at least one attribute of the new period.

5. The method of claim 3, wherein the replacement value comprises a difference between a value of at least one attribute of the additional period and the value of the at least one attribute of the new period.

6. The method of any one of the preceding claims, wherein the first manifest file comprises a plurality of periods, and wherein the method further comprises: determining, based on an additional period within a second manifest file for the content, a most similar period of the plurality of periods.

7. The method of claim 6, wherein the source period comprises the most similar period.

8. The method of any one of the preceding claims, wherein the first manifest file comprises a plurality of periods, and wherein the method further comprises determining, based on the plurality of periods, a most similar period of the plurality of periods, wherein the new period is generated based on the most similar period.

9. The method of claim 8, wherein generating the new period for the manifest update for the content comprises:
determining, based on the most similar period, a replacement value for at least one attribute of the most similar period; and
generating, based on the replacement value for the at least one attribute of the most similar period, the new period for the manifest update for the content, wherein the new period comprises the replacement value for the at least one attribute of the most similar period.

10. The method of claim 8, wherein determining the most similar period of the plurality of periods comprises:
determining, based on at least one difference algorithm, an amount of difference between attributes of an additional period within a second manifest file for the content and attributes of each period of the plurality of periods; and
determining, based on the amount of difference between the attributes of the additional period and attributes of a first period of the plurality of periods, the most similar period, wherein the most similar period comprises the first period.

11. The method of any one of the preceding claims, wherein the first manifest file comprises a plurality of periods, and wherein the method further comprises
determining, based on a most similar period of the plurality of periods, a lowest computational cost for generation of the manifest update, wherein generating the manifest update is based on the lowest computational cost and the first manifest file.

12. The method of claim 11, wherein determining the lowest computational cost comprises determining, based on the most similar period and an additional period within a second manifest file for the content, a lowest computational cost for generation of the manifest update for the content.

13. An apparatus comprising:
one or more processors; and
memory storing processor executable instructions that, when executed by the one or more processors, cause the apparatus to perform the method of any one of claims 1-12.

14. One or more non-transitory computer-readable media storing processor executable instructions that, when executed by one or more processors, cause the one or more processors to perform the method of any one of claims 1-12.

15. A system comprising:
a first computing device configured to perform the method of any one of claims 1-12; and
a second computing device configured to access the content.
